# EUROPÄISCHE PATENTSCHRIFT

(11) **EP 0 923 445 B1**
(45) Veröffentlichungstag und Bekanntmachung des Hinweises auf die Patenterteilung: **29.10.2003**
(21) Anmeldenummer: 97941820.9
(22) Anmeldetag: 23.08.1997
(51) Int. Cl.: B29C 47/04, B29C 47/20

(54) **FASSARTIGER BEHÄLTER AUS KUNSTSTOFF SOWIE VERFAHREN UND VORRICHTUNG ZU SEINER HERSTELLUNG**
DRUM-LIKE CONTAINER OUT OF PLASTIC AND PROCESS AND DEVICE FOR ITS PRODUCTION
CONTENEUR DU TYPE TONNEAU EN MATIERE PLASTIQUE ET PROCEDE ET DISPOSITIF POUR SA FABRICATION

(30) Priorität: 31.08.1996 DE 19635334
(43) Veröffentlichungstag der Anmeldung: 23.06.1999
(73) Patentinhaber: RICHTER, Günther, 57610 Altenkirchen (DE)
(72) Erfinder: RICHTER, Günther, 57610 Altenkirchen (DE)
(74) Vertreter: Schaumburg, Thoenes, Thurn Patentanwälte
(86) Internationale Anmeldenummer: DE9701842
(87) Internationale Veröffentlichungsnummer: WO98008668

(56) Entgegenhaltungen:
- EP-A- 0 321 946
- EP-A- 0 491 093
- WO-A-88/02689
- WO-A-96/18500
- DE-U- 9 107 812
- US-A- 5 204 120
- US-A- 5 464 107
- DATABASE WPI Section Ch, Week 9740 Derwent Publications Ltd., London, GB; Class A17, AN 97-430462 XP002051836 & JP 09 193 303 A (SHISEIDO CO LTD) , 29.Juli 1997

## Beschreibung

Die Erfindung bezieht sich auf einen faßartigen, aus einem diskontinuierlich extrudierten schlauchartigen Vorformling aus thermoplastischem Kunststoff im Blasverfahren hergestellten Behälter mit einer aus einer Innenschicht, einer Außenschicht und mindestens einer Zwischenschicht bestehenden Wandung.

Aus der europäischen Patentveröffentlichung 0 326 584 sind ein Verfahren und eine Vorrichtung zur Herstellung eines großvolumigen Hohlkörpers, beispielsweise eines Fasses, aus Kunststoff mit einer mehrschichtigen Wandung bekannt. Dabei besteht die Vorrichtung aus einem in einem Gehäuse axial verschiebbaren, als Coextrusionskopf wirkenden Ringkolben, der für jede Schicht der Wandung und damit für jede Kunststoffschmelze eine etwa radial verlaufende Fließkanalbohrung aufweist, die jeweils in einen Ringverteiler mündet. Der Ringverteiler geht dann in einen gemeinsamen Fließkanal über, in den die einzelnen Kunststoffschmelzen nacheinander einströmen. Der sich etwa in der Mitte des Ringkolbens befindliche Fließkanal erweitert sich allmählich auf den Querschnitt eines vom Ringkolben beaufschlagten Ringspeicherraumes.

Bei Lager- oder Transportbehältern, beispielsweise bei Fässern, mit einer mehrschichtigen Wandung ist die äußere Schicht der Wandung und damit aber auch die Schicht des Vorformlings, aus dem der faßartige Behälter durch einen Blasvorgang hergestellt wird, beispielsweise zum Schutz gegen UV-Strahlen oder aus optischen Gründen, mit einer besonderen Einfärbung versehen. Andererseits besteht jedoch der Wunsch, ständig von außen, ohne besondere Meßeinrichtungen, sehen zu können, wieviel Flüssigkeit sich in dem faßartigen Behälter befindet.

Aus dem DE-GM 91 07 812 ist eine Vorrichtung zur diskontinuierlichen Herstellung eines schlauchartigen, mehrschichtigen, coextrutierten Vorformlings aus thermoplastischen Kunststoff zur Bildung eines im Blasverfahren hergestellten, faßartigen Behälters bekannt, bei dem zwischen dem Ringkanal für die Kunststoffschmelze der inneren Schicht, die aus klarem beziehungsweise durchsichtigem Kunststoff besteht, und dem Ringkanal für die Außenschicht, die aus einer eingefärbten Kunststoffmasse besteht, ein Verbindungskanal angeordnet ist, durch den in der Außenschicht ein sogenannter Sichtstreifen erzeugt werden kann, der eine Kontrolle des Füllungsgrades des fertigen Behälters ermöglicht. Weist die Wandung des Behälters jedoch mehr als zwei Schichten auf, ist mit dieser Vorrichtung kein Vorformling für einen faßartigen Behälter herstellbar, der einen Sichtstreifen besitzt und somit eine Kontrolle des Füllstandes zuläßt.

Als Stand der Technik wird weiterhin auf die Dokumente US-A-5464107, EP-A-0491093 und EP-A-0321946 verwiesen.

Der Erfindung liegt die Aufgabe zugrunde, einen faßartigen Behälter zu schaffen, dessen Wandung aus mindestens drei Schichten besteht und bei dem es möglich ist, den Füllstand des Füllgutes zu kontrollieren.

Diese Aufgabe wird durch die Merkmale des Anspruchs 1 gelöst.

Ein derartig ausgebildeter Behälter ermöglicht es aufgrund des Sichtstreifens, daß der Füllstand des darin befindlichen Füllgutes regelmäßig überwacht beziehungsweise kontrolliert werden kann.

Weitere Merkmale eines faßartigen Behälters gemäß der Erfindung sowie eines Verfahrens und einer Vorrichtung zu seiner Herstellung sind in den Ansprüchen 2 bis 7 offenbart.

Die Erfindung wird nachfolgend anhand eines in einer Zeichnung in vereinfachter Weise dargestellten Ausführungsbeispieles näher erläutert. Dabei zeigen
- Fig. 1: eine perspektivische Darstellung eines Behälters gemäß der Erfindung,
- Fig. 2: einen Schnitt durch eine erfindungsgemäße Vorrichtung zur Herstellung eines Behälters der Figur 1 und
- Fig. 3: einen vergrößerten Ausschnitt aus der Vorrichtung der Figur 2 im Bereich der Bildung eines Sichtstreifens.

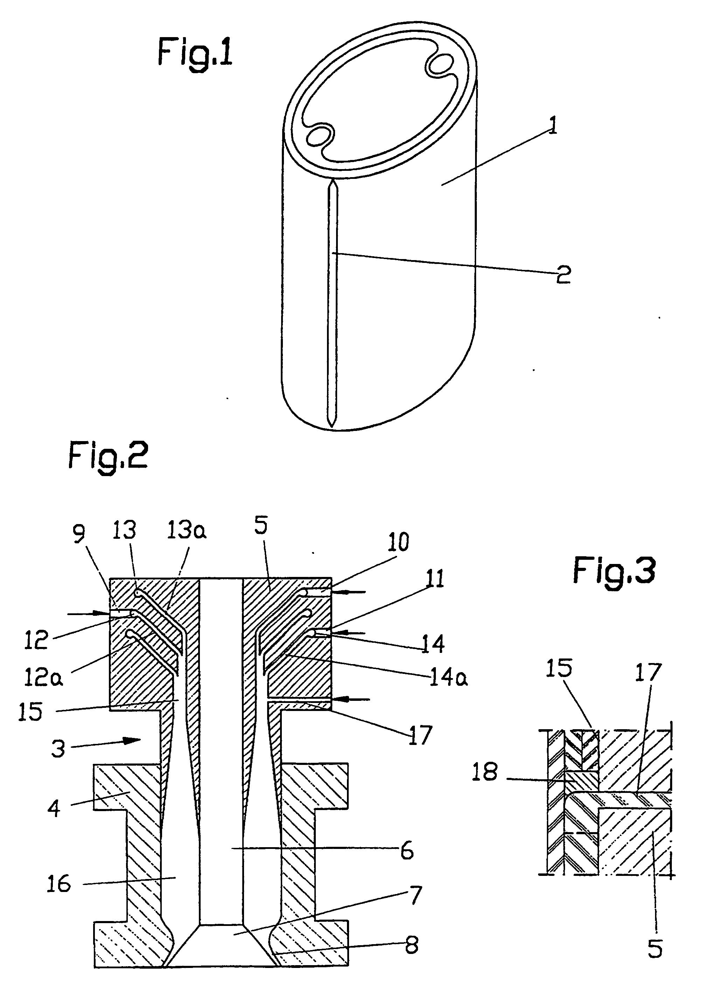

In der Figur 1 der Zeichnung ist ein faßartiger Behälter 1 gezeigt, der aus thermoplastischem Kunststoff aus einem schlauchartigen Vorformling im Blasverfahren hergestellt ist, dessen Wandung aus mindestens drei unterschiedlichen Schichten besteht und in dessen Wandung ein sich in axialer Richtung erstreckender Sichtstreifen 2 eingearbeitet ist. Der schlauchartige Vorformling zu Bildung des faßartigen Behälters 1 wird mittels einer Vorrichtung hergestellt, von der in der Figur 2 der Zeichnung der Ringkolbenspeicher 3 beziehungsweise Ringkolbenstaukopf dargestellt.ist. Der Ringkolbenspeicher 3 besteht zunächst aus einem Speichermantel 4, der in an sich bekannter, nicht dargestellter Weise mit einem an sich bekannten Gehäuse verbunden ist. Der im dargestellten Ausführungsbeispiel ortsfest angeordnete Speichermantel 4 nimmt einen axial verschiebbaren Ringkolben 5 auf, in dem eine Pinole 6 mit einem Düsenpilz 7 axial verschiebbar geführt ist. Zwischen dem Speichermantel 4 und dem Düsenpilz 7 ist ein Düsenspalt 8 ausgebildet, der durch eine axiale Verschiebung der Pinole 6 geöffnet und geschlossen werden kann. Für diese Bewegung ist der Pinole 6 ein nicht dargestellter, beispielsweise als Kolbenzylindereinheit ausgebildeter Antrieb zugeordnet.

In seinem außerhalb des Speichermantels 4 befindlichen Bereichs besitzt der Ringkolben 5 drei Fließkanalbohrungen 9, 10, 11, an die jeweils ein Extruder für die unterschiedlichen Kunststoffschmelzen angeschlossen ist. Über die Fließkanalbohrung 10 wird beispielsweise eine klare beziehungsweise durchsichtige Kunststoffschmelze zugeführt, die die sogenannte Innenschicht des zu erzeugenden, schlauchartigen Vorformlings und damit des späteren Behälters 1 bildet. Der Fließkanalbohrung 9 wird eine Kunststoffschmelze zugeführt, die aus einem Recycling-Kunststoff besteht. Hier ist es vorteilhaft, wenn für diesen Recycling-Kunststoff das sogenannte Butzenmaterial verwendet wird, welches beim Blasformen des Behälters 1 anfällt. Die über die Fließkanalbohrung 9 zugeführte Kunststoffschmelze bildet die sogenannte Zwischenschicht des Vorformlings und damit des späteren Behälters 1. Diese Zwischenschicht ist undurchsichtig. Über die Fließkanalbohrung 11 gelangt schließlich eine dritte Kunststoffschmelze in den Ringkolben 5, die eingefärbt ist und die aus einem UV-stabilen Werkstoff besteht. Diese Kunststoffschicht bildet die Außenschicht des Vorformlings und damit des geblasenen Behälters 1.

Die Fließkanalbohrungen 9, 10, 11 gehen jeweils zunächst in einen umlaufenden Ringverteiler 12, 13, 14 über, an die sich jeweils ein schräg verlaufender Ringkanal 12a, 13a und 14a anschließt. Diese Ringkanäle 12a, 13a, 14a münden nacheinander in einen gemeinsamen Ringkanal 15, der sich allmählich auf die Breite eines Ringspeicherrraumes 16 im Speichermantel.4 erweitert. Dadurch, daß die einzelnen Kunststoffschmelzen nacheinander dem gemeinsamen Ringkanal 15 zugeführt werden und derselbe sich nur allmählich auf den Querschnitt des Ringspeicherrraumes 16 erweitert, ist sichergestellt, daß die einzelnen Schichten der mehrschichtigen Kunststoffschmelze in ihrer Struktur nicht verändert werden, sondern erhalten bleiben. Dies gilt auch für den Behälter 1, der aus dem im Ringkolbenspeicher 3 erzeugten, schlauchartigen Vorformling hergestellt wird.

In dem dargestellten Ausführungsbeispiel der Figur 2 ist im rechten Teil des Ringkolbens 5 noch eine weitere Fließkanalbohrung 17 vorgesehen, die mit einem Extruder verbunden ist, von dem eine transluzente Kunststoffschmelze dem Ringkolben 5 zugeführt wird. Bedarfsweise kann diese Fließkanalbohrung 17 auch mit dem Extruder verbunden sein, der an die Fließkanalbohrung 9 angeschlossen ist. Dabei ist es jedoch erforderlich, daß der Fließkanalbohrung 17 eine Einrichtung vorgeordnet ist, über die der Druck und die Menge der zugeführten, transluzenten Kunststoffschmelze genau gesteuert werden kann.

Die Fließkanalbohrung 17 mündet mit Abstand von den schräg verlaufenden Ringkanälen 12a, 13a, 14a radial in den gemeinsamen Ringkanal 15. Im Mündungsbereich dieser Fließkanalbohrung 17 ist in den Ringkanal 15 ein als Torpedo 18 ausgebildeter Strömungskörper (Figur 3) eingesetzt, der die äußere Schicht und die Zwischenschicht der mehrschichtigen Kunststoffschmelze aufspaltet und so das Zuführen der transluzenten Kunststoffschmelze gestattet. Der Torpedo 18 erstreckt sich dabei bis an die die Innenschicht des Vorformlings bildende Kunststoffschmelze, die nicht eingefärbt ist. Durch die über die Fließkanalbohrung 17 zugeführte, transluzente Kunststoffschmelze wird in den nicht durchsichtigen Kunststoffschmelzen der Außenschicht und der Zwischenschicht ein durchsichtiger Streifen hergestellt, der später am geblasenen Behälter 1 den Sichtstreifen 2 bildet. Damit ist es möglich, den Füllstand in dem faßartigen Behälter 1 optisch, also ohne besondere Meßeinrichtung, zu überprüfen beziehungsweise zu überwachen. Über die Fließkanalbohrung 17 wird in vorteilhafter Weise jedoch die transluzente Kunststoffschmelze nicht kontinuierlich durchgeführt, sondern nur in dem Bereich, der später die Mantelfläche des Behälters 1 bildet. Bekanntlich wird ja weder im Unterboden noch im Oberboden des Behälters 1 ein Sichtstreifen 2 benötigt.

## Patentansprüche

1. Faßartiger, aus einem diskontinuierlich extrudierten schlauchartigen Vorformling im Blasverfahren hergestellter Behälter (1) aus thermoplastischem Kunststoff, mit einer aus einer Innenschicht aus transluzentem Kunststoff, einer Außenschicht aus eingefärbtem, UV-stabilem Kunststoff und mindestens einer Zwischenschicht aus nicht transluzentem Kunststoff bestehenden Wandung, wobei die Wandung einen sich in axialer Richtung nur durch die Zwischenschicht und die Außenschicht erstreckenden Sichtstreifen (2) aus transluzentem Kunststoff aufweist.

2. Behälter nach Anspruch 1,
**dadurch gekennzeichnet,**
**daß** der Sichtstreifen (2) aus einem UV-stabilisierten Kunststoff gebildet ist.

3. Behälter nach Anspruch 1 oder 2,
**dadurch gekennzeichnet,**
**daß** die Zwischenschicht aus Recycling-Kunststoff gebildet ist.

4. Behälter nach Anspruch 3,
**dadurch gekennzeichnet,**
**daß** der Recycling-Kunststoff aus dem beim Blasverfahren anfallenden Butzenmaterial gebildet ist.

5. Verfahren zur Herstellung eines faßartigen, eine mindestens aus drei Schichten bestehende Wandung aufweisenden Behälters aus thermoplastischem Kunststoff nach mindestens einem der Ansprüche 1 bis 4, bei dem mindestens drei unterschiedliche, der Innen-, der Außen- und der Zwischenschicht entsprechende, ringförmige Kunststoffschmelzen nacheinander und mittig innerhalb eines Ringkanals (15) einen mit einem sich trichterförmig erweiternden Ringspeicherraum versehenen, relativ zu einem Speichermantel (4) verschiebbaren Ringkolbens (5) zusammengeführt und als mehrschichtige Kunststoffschmelze zur diskontinuierlichen Bildung eines schlauchartigen Vorformlings ausgestoßen werden und bei dem anschließend der Vorformling zu dem Behälter aufgeblasen wird,
**dadurch gekennzeichnet,**
**daß** nach dem Zusammenführen der ringförmigen Kunststoffschmelzen und vor deren Eintritt in die trichterförmige Erweiterung des Ringspeicherraumes nur in die Außenschicht und die Zwischenschicht der mehrschichtigen Kunststoffschmelze ein schmaler Streifen aus einer transluzenten Kunststoffschmelze eingespeist wird.

6. Verfahren nach Anspruch 7,
**dadurch gekennzeichnet,**
**daß** das Einspeisen der transluzenten Kunststoffschmelze zumindest über den größten Teil der Zeit der Füllung des Ringspeicherraumes erfolgt.

7. Vorrichtung zur Herstellung eines faßartigen Behälters und zur Durchführung des Verfahrens nach mindestens einem der Ansprüche 1 bis 6, bestehend aus einem Ringkolbenspeicher (3) mit einem Speichermantel (4) und einen relativ zum Speichermantel axialverschiebbaren Ringkolben (5), welcher einen sich trichterförmig erweiternden Ringspeicherraum und einen vorgeordneten Ringkanal (15) aufweist, mit einem nachgeordneten absperrbaren Düsenspalt (8) und mindestens drei dem Ringkanal (15) vorgeordneten Ringverteilern, die über Fließkanalbohrungen an mindestens drei Extruder mit unterschiedlichen Kunststoffschmelzen angeschlossen sind,
**dadurch gekennzeichnet,**
**daß** unterhalb der Einmündung aller Ringverteiler (12, 13, 14) in den Ringkanal (15) und vor der trichterförmigen Erweiterung des Ringspeicherraumes (16) eine mit einem Extruder für eine transluzente Kunststoffschmelze verbundene Fließkanalbohrung (17) über einen Strömungskörper (18) in den Ringkanal (15) mündet, welcher Strömungskörper sich nur in die die Außenschicht und die Zwischenschicht des Vorformlings bildenden Kunststoffschmelzen erstreckt.

## Claims

1. Drum-like container (1) made of a discontinuously extruded hose-like preform of thermoplastic in a blow-moulding process, having a wall consisting of an inner layer of translucent plastic, an outer layer of coloured UV-stable plastic and at least one intermediate layer of non-translucent plastic, the wall having a visual indicator strip (2) made of translucent plastic and running in the axial direction only through the intermediate layer and the outer layer.

2. Container according to claim 1,
**characterized in that**
the visual indicator strip (2) is formed of a UV-stablizised plastic.

3. Container according to claim 1 or 2,
**characterized in that**
the intermediate layer is formed of recycled plastic.

4. Container according to claim 3,
**characterized in that**
the recycled plastic is formed of the flash material arising from the blow-moulding process.

5. Method of manufacturing a drum-like container of thermoplastic having a wall consisting of at least three layers according to at least one of the claims 1 to 4, wherein at least three different annular plastic melts corresponding to the inner layer, outer layer and the intermediate layer, are brought together successively and axially within an annular channel (15) of an annular piston (5) which is provided with a annular storage space that is enlarged in a funnel-shaped manner and which is displaceable relative to a storage casing (4), and are ejected as a multi-layer plastic melt for the discontinuous formation of a hose-like preform, and wherein subsequently the preform is blown up to form the container,
**characterized in that**
after the bringing together of the annular plastic melts and before their entry into the funnel-shaped enlargement of the annular storage space a narrow strip of a translucent plastic melt is fed only into the outer layer and the intermediate layer of the multi-layer plastic melt.

6. Method according to claim 7,
**characterized in that** the feeding of the translucent plastic melt takes place at least for the largest part of the time of the filling of the annular storage space.

7. Apparatus for manufacturing a drum-like container and for implementing the method according to at least one of the claims 1 to 6, comprising an annular piston storage unit (3) with a storage casing (4) and an annular piston (5) displaceable in axial direction relative to the storage casing, said annular piston having an annular storage space that is enlarged in a funnel-shaped manner and has a preceding annular channel (15), with a closable jet aperture (8) arranged downstream and at least three annular distributors arranged upstream of the annular channel (15), said annular distributors being connected to at least three extruders with different plastic melts via flow channel bores,
**characterized in that**
below the discharge orifice of all annular distributors (12, 13, 14) into the annular channel (15) and preceding the funnel-shaped enlargement of the annular storage space (16) a flow channel bore (17) connected to an extruder for a translucent plastic melt terminates into the annular channel (15) via a flow body (18), which extends only into the plastic melts forming the outer layer and the intermediate layer of the preform.

## Revendications

1. Conteneur (1) en matière thermoplastique, de type tonneau, réalisé dans un procédé de soufflage à partir d'une préforme tubulaire extrudée en discontinu, lequel conteneur comporte une paroi constituée d'une couche intérieure en matière plastique translucide, d'une couche extérieure en matière plastique colorée stable aux UV, et au moins une couche intermédiaire en matière plastique non translucide, ladite paroi comportant une bande visible (2) en matière plastique translucide s'étendant dans la direction axiale seulement à travers la couche intermédiaire et la couche extérieure.

2. Conteneur selon la revendication 1, **caractérisé en ce que** la bande visible (2) est formée à partir d'une matière plastique stabilisée vis-à-vis des UV.

3. Conteneur selon la revendication 1 ou 2, **caractérisé en ce que** la couche intermédiaire est formée à partir d'une matière plastique de recyclage.

4. Conteneur selon la revendication 3, **caractérisé en ce que** la matière plastique de recyclage est formée à partir du morceau de matière produit lors du procédé de soufflage.

5. Procédé de fabrication d'un conteneur en matière thermoplastique, de type tonneau, comportant une paroi constituée d'au moins trois couches selon au moins l'une des revendications 1 à 4, dans lequel au moins trois masses de matière plastique différentes en fusion, de forme annulaire, correspondant à la couche intérieure, à la couche extérieure et à la couche intermédiaire, sont assemblées successivement et axialement à l'intérieur d'un canal annulaire (15) d'un piston annulaire (5) doté d'un espace de stockage annulaire s'élargissant en entonnoir et déplaçable par rapport une enveloppe de stockage (4), et sont poussées en tant que masse de matière plastique multi-couches en fusion en vue de former de façon discontinue une préforme tubulaire et dans lequel la préforme est ensuite soufflée pour donner le conteneur,
**caractérisé en ce qu'**une petite bande de masse de matière plastique translucide en fusion est introduite seulement dans la couche extérieure et dans la couche intermédiaire de la masse de matière plastique multi-couches en fusion après l'assemblage des masses de matière plastique en fusion et avant leur entrée dans l'élargissement en forme d'entonnoir de l'espace de stockage annulaire.

6. Procédé selon la revendication 7, **caractérisé en ce que** l'introduction de la masse de matière plastique en fusion translucide est effectuée au moins pendant la plus grande partie du temps de remplissage de l'espace de stockage annulaire.

7. Dispositif de fabrication d'un conteneur de type tonneau et de mise en oeuvre du procédé selon l'une au moins des revendications 1 à 6, se composant d'une unité de stockage à piston annulaire (3) comportant
une enveloppe de stockage (4) et un piston annulaire (5) qui est déplaçable axialement par rapport à l'enveloppe de stockage et qui comporte un espace de stockage annulaire s'élargissant en forme d'entonnoir, et un canal annulaire (15) agencé en amont,
une fente d'éjection (8) agencée en aval et pouvant être obturée, et
au moins trois distributeurs annulaires qui sont agencés en amont du canal annulaire (15) et qui sont raccordés via des alésages de canal d'écoulement à au moins trois extrudeuses avec différentes masses de matière plastique en fusion,
**caractérisé en ce qu'**un alésage de canal d'écoulement (17), relié à une extrudeuse destinée à une masse de matière plastique en fusion translucide, débouche via un corps d'écoulement (18) dans le canal annulaire (15) au-dessous de l'endroit où tous les distributeurs annulaires (12, 13, 14) débouchent dans le canal annulaire (15) et en amont de l'élargissement en forme d'entonnoir de l'espace de stockage annulaire (16), ledit corps d'écoulement s'étendant seulement dans les masses de matière plastique en fusion formant la couche extérieure et la couche intermédiaire de la préforme.
